## Europäisches Patentamt
## European Patent Office
## Office européen des brevets

(11) Publication number: **0 148 277**
**A1**

(12)

# EUROPEAN PATENT APPLICATION

published in accordance with Art. 158(3) EPC

(21) Application number: **84902613.3**

(22) Date of filing: **02.07.84**

Data of the international application taken as a basis:

(86) International application number: **PCT/JP 84/00342**

(87) International publication number: **WO 85/00363 (31.01.85 85/3)**

(51) Int. Cl.⁴: **C 04 B 35/56**

(30) Priority: **02.07.83 JP 120767/83**

(43) Date of publication of application: **17.07.85 Bulletin 85/29**

(84) Designated Contracting States: **DE FR GB**

(71) Applicant: **KUROSAKI REFRACTORIES CO. LTD., 1-1, Higashihama-machi Yahatanishi-ku, Kitakyushu-shi Fukuoka 806 (JP)**

(72) Inventor: **ONDA, Hiroshi, 1-19, Nishinarumizu 2-chome Yahatanishi-ku, Kitakyushu-shi Fukuoka 806 (JP)**
Inventor: **HATTA, Tokuaki, 6-19, Higashiyama 2-chome Yahatahigashi-ku, Kitakyushu-shi Fukuoka 805 (JP)**

(74) Representative: **Schön, Alfred, Dr., Patentanwälte Müller-Boré, Deufel, Schön, Hertel Lewald, Otto Isartorplatz 6 Postfach 26 02 47, D-8000 München 26 (DE)**

(54) **PROCESS FOR PRODUCING SINTERED SILICON CARBIDE.**

(57) A process for producing a sintered silicon carbide having a high strength at elevated temperatures and a uniform fine structure, which comprises allowing an organosilicon polymer to be present on the surface of starting SiC particles of 1 μ or less in size to thereby precipitate super-fine SiC particles produced from the organosilicon polymer onto the starting SiC particles in a heating step prior to a sintering step. The super-fine SiC particles are extremely active in comparison with the starting SiC particles and are effectively precipitated between the starting SiC particles, and hence part of them serves to bond the starting SiC particles to each other. Thus, the substantial sinterability of a molding is enhanced, and sintering can be conducted in a nitrogen-containing atmosphere without causing reduction in density and deterioration of bonding properties.

ACTORUM AG

S P E C I F I C A T I O N

PROCESS FOR PRODUCING SILICON CARBIDE SINTERED PRODUCT

## TECHNICAL FIELD

This invention relates to a process for producing a silicon carbide sintered product having a homogenous and fine structure with high hot strength.

## BACKGROUND OF THE INVENTION

Silicon carbide is structural material having various features that it is chemically stable, excellent in abrasion resistance and high hot strength.

Heretofore, as the process for producing such silicon carbide sintered product, the sintering methods such as reaction sintering, atmospheric sintering with the addition of sintering promoting agent such as boron, aluminum and beryllium or pressurized sintering have been empolyed. Among those conventional methods, reaction sintering comprising the steps of mixing SiC particles and carbon, molding the mixture with addition of an organic resin binder thereto and impregnating molten Si to obtain a sintered product consisting of SiC and Si, has a merit that sintered products of complicated configuration can be obtained rather easily. However, it has a demerit that the sintering temperature is higher than $1400^{\circ}C$ and the strength is abruptly reduced due to the melting of Si.

Although dense and high strength sintered products can be obtained by the pressurized sintering method, their configuration is limited only to that of relatively simple shapes.

While on the other hand, although sintered products having high hot strength and relatively complicated shape can be obtained by the atmospheric sintering method, it has a defect that huge plate crystals of larger than several hundreds microns order, which are referred to as feathers, are often occured during the densification step and significantly degrade the strength. Occurrence of such feathers can be suppressed by adopting means of (1) lowering the sintering temperature, (2) mixing $N_2$ in the atmosphere, (3) using nitride as the additives, and the like.

However, all of these coutermeasures substantially lead to the hindrance of advance of sintering and, as the result, lowering the density of the sintered product or occurring degradation in the bonding between SiC particles.

The object of this invention is to provide a process for producing a silicon carbide sintered product capable of obtaining a molded body with less defects relatively easily and inhibiting the generation of the feathers and irregular grain growth without hindering the densification and with no degradation in the grain bonding by effectively utilizing an organic silicon polymer in the production of the silicon carbide sintered product.

## DISCLOSURE OF THE INVENTION

According to this invention, an organic silicon polymer is made to exist on the surface of SiC particles with less than 1 $\mu$ diameter as the starting material, thereby depositing ultrafine SiC derived from the organic silicon polymer on the SiC particles as the starting material during the temperature rising step before sintering. Since the ultrafine SiC has an extremely higher activity as compared with that of the starting SiC particles as the starting material and can effectively be deposited in the area between the starting SiC particles, a portion thereof is absorbed in the starting SiC particles to promote the densification, while the other portion has a function to enhance the bonding between the starting SiC particles on sintering.

Hence, the sintering property of the molded body can be increased practically, and it can be sintered in an atmosphere including $N_2$ without lowering the density and causing degradation in the bonding. Furthermore, since this function is equally developed to all of the starting SiC particles in the sintered product, it can provide all SiC particles with the equal chance of grain growth. Therefore, generation of the feathers is suppressed, the grain size is made fine and uniform and, accordingly, bonding between the particles is enhanced as compared with the conventional sintered products. Furthermore, since the organic silicon polymer functions as effective promoting agents on molding the blend, a less defective molded body can be obtained relatively easily and, accordingly, silicon carbide sintered product having high strength and homogenous structure can be obtained.

According to this invention, fine particles of less than 1 μ diameter are used as the starting SiC material in order to maintain the sinter-driving force.

The organic silicon polymer in this invention means those high molecular organic silicon compounds whose skelton is mainly composed of silicon and carbon, side chains are decomposed almost entirely at a temperature of about 800°C to form nearly amorphous continuous structure mainly composed of Si-C bonds and which deposit extremely fine SiC of less than 1000 Å at a temperature higher than 1000°C.

The amount of the organic silicon polymer added is from 1.5 to 30 parts by weight based on 100 parts by weight of the powdery silicon carbide. If the addition amount is less than 1.5 parts by weight, said effect by the extremely fine SiC is insufficient and, if it is more than 30 parts by weight, no sufficient strength can be obtained.

Further, compounds containing boron, aluminum and beryllium as well as carbonaceous materials can be used as a sintering promoting agent, and particularly an Al and Al compound such as AlN are suitablly applicable for controlling the extremely fine structure of the sintered product. The amount of an Al compound to be added is preferably from 0.5 to 5 parts by weight as Al amount based on 100 parts by weight of the total SiC content in the silicon carbide sintered product resulted.

Furthermore, while an organic binder can be added as required for molding, no particular type is required as the organic binder but phenol resin, furan resin or the like can be used for exmaple. Referring to the sintering condition in this invention, although the sintering can be performed without causing hindrance to the densification, for example, even in $N_2$-containing atmosphere, Ar gas atmosphere is usually employed. In this case, a sintered product much densified can be obtained by elevating the pressure of the Ar gas higher than 1 atm.

Further, the sintering in this invention is performed within a range between 2100°C and 2300°C. If the sintering temperature is lower than 2100°C, no sufficient densification is resulted and, if it is higher than 2300°C, decomposition of SiC is resulted again failing to obtain a dense sintered product.

BEST MODE FOR CARRYING OUT THE INVENTION

The reason for setting the conditions in the production process according to this invention will now be illustrated referring to test examples. The all testing materials hereinafter were prepared in the same manner as in Example 1 described later.

Test Example 1

The effect of the addition amount of the organic silicon polymer on the sintered product was confirmed by the experiment.

Table 1 shows the conditions and results of the test example. It was confirmed from this test example that if the addition amount is less than 1.5 parts by weight, the effect due to the ultrafine SiC is insufficient and, if it is more than 30 parts by weight, no sufficient strength can be obtained.

Table 1

| No. | Addition amount of organic silicon polymer (parts by weight) | Linear shrinkage (%) | Density of sintered product (g/cm³) | Average strength (kg/mm²) | Structure |
|---|---|---|---|---|---|
| 1 | 0 | 17.6 | 3.14 | 62 | irregular particle, feather |
| 2 | 1.5 | 17.9 | 3.16 | 72 | platelet irregular particle |
| 3 | 5 | 18.0 | 3.17 | 81 | platelet uniform |
| 4 | 10 | 18.3 | 3.19 | 92 | " |
| 5 | 20 | 18.0 | 3.17 | 85 | " |
| 6 | 30 | 17.2 | 3.10 | 71 | regular particles, uniform |
| 7 | 40 | 16.0 | 3.00 | 61 | " |

Test Example 2

The effects of the sintering temperature on the properties of the sintered product were examined with respect to powder compact containing an organic silicon polymer. The conditions and the results of the test are shown in Table 2.

Table 2

| No. | Sintering temperature ($^{o}$C) | Linear shrinkage (%) | Density of sintered product (g/cm$^3$) | Average strength at 1300$^{o}$C * (kg/mm$^2$) |
|---|---|---|---|---|
| 1 | 2000 | 12.3 | 2.73 | 28 |
| 2 | 2100 | 16.9 | 3.08 | 70 |
| 3 | 2180 | 17.8 | 3.15 | 93 |
| 4 | 2240 | 17.6 | 3.13 | 85 |
| 5 | 2300 | 16.2 | 3.02 | 74 |
| 6 | 2400 | 12.3 | 2.73 | - |

* According to JIS R1601

It was confirmed from this test exmaple that if the sintering temperature is lower than 2100$^{o}$C, no sufficient densification is resulted and, if it is higher than 2300$^{o}$C, SiC decomposition is resulted again failing to obtain a dense sintered product.

Test Example 3

The effect of $N_2$ gas atmosphere as the sintering atmosphere was examined. Sintering was carried out for the powder compacts with and without adding 7 parts by weight of the organic silicon polymer at 2200°C while varying the atmosphere. The conditions and the results of the test are shown in Table 3.

From this test exmaple, it was confirmed that although hindrance to the densification and the reduction in the strength were observed for the sintering in the $N_2$ containing atmosphere in the molded body without adding the organic silicon polymer, no hindrance to the densification occurred and the strength was increased even when the sintering was carried out in an atmosphere slightly containing $N_2$ in the sintered product added with the organic silicon polymer.

Test Example 4

The effects of the addition of Al, AlN as the sintering promoting agents together with the effect of adding the organic silicon polymer were examined. Experiment was carried out for the case with or without adding 7 parts by weight of the organic silicon polymer. The conditions and the results of the experiment are shown in Table 4.

It was confirmed from the test that the addition of the organic silicon polymer has an effect of suppressing the generation of the feathers and the effect of adding Al, AlN is obtained when the addition amount is within the range between 0.5 - 5 parts by weight calculated as Al.

Table 3

| No. | Condition for atmosphere | Addition amount of organic silicon polymer (parts by weight) | Density of sintered product (g/cm$^3$) | Average strength at 1300$^\circ$C (kg/mm$^2$) | Structure |
|---|---|---|---|---|---|
| 1 | Ar 99.99 V/0<br>N$_2$ 0.01 V/0 | 0.0 | 3.01 | 69 | regular particle |
| 2 | " | 7.0 | 3.16 | 96 | platelet particle |
| 3 | Ar 99.9 V/0<br>N$_2$ 0.5 V/0 | 0.0 | 2.81 | 32 | porous |
| 4 | " | 7.0 | 3.12 | 73 | platelet particle |

Table 4

| No. | Addition amount of organic silicon polymer (parts by weight) | Al amount (parts by weight) | AlN amount (parts by weight) | Content as Al (parts by weight) | Density of sintered particles (g/cm$^3$) | Average strength at 1300°C (kg/mm$^2$) | Structure |
|---|---|---|---|---|---|---|---|
| 1 | 0 | 1.0 | 0 | 1.0 | 3.15 | 62 | inhomogenous, feather |
| 2 | 7 | 1.0 | 0 | 1.0 | 3.17 | 83 | platelet homogenous |
| 3 | 0 | 0 | 1.52 | 1.0 | 3.11 | 68 | regular particle |
| 4 | 7 | 0 | 1.52 | 1.0 | 3.15 | 88 | platelet homogenous |
| 5 | 7 | 0.3 | 1.52 | 1.3 | 3.18 | 90 | " |
| 6 | 7 | 1.0 | 0.46 | 1.3 | 3.19 | 82 | " |
| 7 | 7 | 2.0 | 3.04 | 4.0 | 3.13 | 75 | " |
| 8 | 7 | 3.0 | 3.04 | 5.0 | 3.12 | 77 | " |
| 9 | 7 | 2.0 | 4.56 | 5.0 | 3.12 | 72 | " |
| 10 | 7 | 3.0 | 4.56 | 6.0 | 3.12 | 62 | " |
| 11 | 7 | 0.5 | 0 | 0.5 | 3.10 | 73 | " |
| 12 | 0 | 0.5 | 0 | 0.5 | 2.80 | 43 | porous |
| 13 | 7 | 0.4 | 0 | 0.4 | 2.91 | 51 | " |

0148277

The merits of this invention will now be made clear referring to the following examples.

Example 1

To 100 parts by weight of ɑ-SiC powder of 0.4 μ in average particle size, were added 7 parts by weight of an organic silicon polymer and 200 parts by weight of hexane as the solvent and, after mixing for 14 hours in a ball mill, they were dried while removing hexane and further pulverized and sieved. Thus, SiC powder coated on the surface thereof with the organic silicon polymer was obtained.

To 100 parts by weight of the total amount of SiC in the primary powder, were added 5.7 parts by weight of novolac type phenol resin, 0.7 parts by weight of Al powder of 5 μ in average particle size, 0.6 parts by weight of hexamethylenetetramine, 1.5 parts by weight of AlN powder of 2 μ in average particle size and 200 parts by weight of ethanol as the dispersant and, after mixing in a ball mill for 14 hours, they were dried while removing ethanol and pulverized and sieved to obtain molding powder of less than 37 μ in particle size.

The molding powder was subjected to rubber press under the pressure of $1.4t/cm^2$ to obtain a powder compact of 20 x 15 x 50 mm in size.

The powder compact was heated to a temperature of 2200°C under an Ar atmosphere and held there for 60 min. The thus obtained sintered product showed about 18 % linear shrinkage and had a density of 3.18 g/cm$^3$ (99% TD).

The structure of the sintered product comprised platelet particles of about 2 μ in particle size entangled or interwoven with each other, and was homogenous neither with feathers nor inhomgenous grain growth.

A specimen of 3 x 4 x 40 mm in size was cut out from the sintered product by using a diamond cutter and, upon measuring the three point-bending strength at 1300°C, it showed an average strength of 95 kg/mm$^2$ and the Weibull coefficient determined for 30 specimens obtained under the same conditions was m = 17.

Comparative Example

A sintered product was obtained quite in the same manner as in Example 1, although the organic silicon polymer was not added.

The sintered product thus obtained showed about 16.6 % of linear shrinkage and it had a density of 3.11 g/cm$^3$ (97% TD).

The structure of the sintered product was not homogenous comprising platelet particles of 3 - 4 μ in average particle size and feathers of about 100 μ in

size.

Upon determining the three point-bending strength at 1300°C in the same manner as in Example 1, it had average strength of 65 kg/mm$^2$ and the Weibull coefficient determined for 30 specimens was m = 11.

Example 2

A powder for molding with less than 37 μ in particle size prepared in the same manner as in Example 1 was placed in a graphite mold with 50 mm inner diameter and subjected to pressurized sintering at 2050°C under the pressure of 400 kg/cm$^2$. The sintered product thus obtained had a density of 3.19 g/cm$^3$ and the average three point-bending strength was 71.2 kg/mm$^2$.

Example 3

To 100 parts by weight of the total SiC content in the primary powder prepared in the same manner as in Example 1, were mixed 5.7 parts by weight of novolac type phenol resin, 0.6 parts by weight of hexamethylenetetramine and 1.0 parts by weight of amorphous boron in a ball mill, which were then dried, pulverized and sieved to obtain a molding powder with less than 37 μ in particle size. The molding powder was subjected to rubber press and then to atmospheric sintering at 2200°C in Ar. The thus obtained sintered product had a density of a 3.18 g/cm$^3$ and an average three point-bending strength of 85 kg/mm$^2$.

Example 4

10 parts by weight of butanol was added to the molding powder prepared in the same manner as in Example 1. The molding and sintering were carried out in the same manner as in Example 1. The average three point-bending strength was 97 /kg/mm$^2$ and the Weibull coefficient was m = 21 for 30 specimens thus obtained.

Exmaple 5

The molded body prepared in the same manner as in Example 1 was heated under an Ar atmosphere at 25 atm to a temperature of 2200$^\circ$C and held there for 60 min., to obtain a sintered product of 3.20 g/cm$^3$.

C L A I M

1. A process for producing a silicon carbide sintered product, wherein a mixture containing powdery silicon carbide, sintering promoting agent and an organic silicon polymer whose main skelton is mainly composed of Si and C is molded while incorporating, if required, an organic binder, and then sintered in an inert atmosphere at a temperature range from 2050°C to 2350°C.

2. The process for producing the silicon carbide sintered product as defined in claim 1, wherein the content of the organic silicon polymer is from 1.5 to 30 parts by weight based on 100 parts by weight of the silicon carbide powder.

3. The process for producing the silicon carbide sintered product as defined in claim 1, wherein the sintering promoting agent is C and Al and/or AlN, in which the content of Al and AlN is from 0.5 to 5 parts by weight calculated as Al based on 100 parts by weight of the total SiC content.

4. The process for producing the silicon carbide sintered product as defined in claim 1, wherein the sintering is carried out in an inert atmosphere under the pressure higher than 1 atm.

5. The process for producing the silicon carbide sintered product as defined in claim 1, wherein a softening agent for the organic silicon polymer is added to the mixture.

6. The process for producing the silicon carbide sintered product as defined in claim 5, wherein the softening agent is butanol.

C L A I M

1. (Amended) Process for producing silicon carbide sintered product comprising molding a mixture containing silicon carbide powder, sintering promoting agent and organic silicon polymer whose main skeleton is composed of Si and C while incorporating, if required, an organic binder, and sintering said molded mixture in an inert gas atmosphere at a temperature range from 2050°C to 2350°C, wherein said sintering promoting agent is C and Al and/or AlN, and said organic silicon polymer is prepared by adding, mixing and polymerizing polyborosiloxane which has a skeleton of B, Si and O and has a phenyl group at least on a part of side chains of Si, with polysilane.

2. (Amended) Process for producing silicon carbide sintered product according to claim 1, said sintering promoting agent is C and B and/or BN and said organic silicon polymer is prepared by adding, mixing and polymerizing aluminum halide anhydride with polysilane, wherein said sintering promoting agent shows the absorption for far-infrared region of $450 - 300 \text{ cm}^{-1}$ in an infrared absorption spectra and the end of absorption in an ultraviolet absorption spectra is 340 - 370 nm, and said polymer has a number mean molecular weight of 400 - 5000.

3. (Amended) Process for producing silicon carbide sintered product according to claim 1 or 2, wherein the contained amount of said organic silicon polymer is

0148277

1.5 - 30 parts by weight relative to 100 parts by weight of said silicon carbide powder.

4. (Amended) Process for producing silicon carbide sintered product according to claim 1, wherein the amount of B element in said mixture is less than 0.3 parts by weight and more than 0.03 parts by weight relative to 100 parts by weight of said silicon carbide powder.

5. (Amended) Process for producing silicon carbide sintered product according to claim 2, wherein the amount of Al element in said mixture is less than 0.3 parts by weight and more than 0.03 parts by weight relative to 100 parts by weight of silicon carbide powder.

6. (Amended) Process for producing silicon carbide sintered product according to claim 1 or 2, wherein sintering is carried out in an inert gas atmosphere under the pressure of more than 1 atm and less than 100 atm.

7. (Added) Process for producing silicon carbide sintered product according to claim 1 or 2, wherein a softening agent of organic silicon polymer is added in said mixture and said mixture is molded by hydrostatic isothermal pressing.

8. (Added) Process for producing silicon carbide sintered product according to claim 7, wherein said softening agent is a butanol.

# INTERNATIONAL SEARCH REPORT

0148277

International Application No. PCT/JP84/00342

## I. CLASSIFICATION OF SUBJECT MATTER (if several classification symbols apply, indicate all) [3]

According to International Patent Classification (IPC) or to both National Classification and IPC

Int. Cl[3]  C04B 35/56

## II. FIELDS SEARCHED

| Minimum Documentation Searched [4] | |
| --- | --- |
| Classification System | Classification Symbols |
| IPC | C04B 35/56 |

| Documentation Searched other than Minimum Documentation to the Extent that such Documents are Included in the Fields Searched [5] |
| --- |
| |

## III. DOCUMENTS CONSIDERED TO BE RELEVANT [14]

| Category* | Citation of Document, [16] with indication, where appropriate, of the relevant passages [17] | Relevant to Claim No. [18] |
| --- | --- | --- |
| X | JP, A, 52-73907 (Tohoku Daigaku Kinzoku Zairyo Kenkyusho-cho) 21 June 1977 (21. 06. 77) | 1 - 6 |
| X | JP, A, 55-116665 (NGK Insulators, Ltd.) 8 September 1980 (08. 09. 80) & DE, A, 3007384 | 1 - 6 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
| --- | --- |
| July 19, 1984    (19. 07. 84) | August 27, 1984    (27. 08. 84) |
| International Searching Authority [1] | Signature of Authorized Officer [2] |
| Japanese Patent Office | |

Form PCT/ISA/210 (second sheet) (October 1981)